**Europäisches Patentamt**

(19) **European Patent Office**

**Office européen des brevets**

(11) Veröffentlichungsnummer: **0 118 712**
**B1**

(12) # EUROPÄISCHE PATENTSCHRIFT

(45) Veröffentlichungstag der Patentschrift:
09.04.86

(51) Int. Cl.⁴: **C 09 C 1/00**

(21) Anmeldenummer: **84100976.4**

(22) Anmeldetag: **01.02.84**

(54) Verfahren zur Herstellung von Zirkonsilikat-Farbkörpern.

(30) Priorität: **02.03.83 DE 3307225**

(43) Veröffentlichungstag der Anmeldung:
**19.09.84 Patentblatt 84/38**

(45) Bekanntmachung des Hinweises auf die Patenterteilung:
**09.04.86 Patentblatt 86/15**

(84) Benannte Vertragsstaaten:
**BE DE FR GB IT NL**

(56) Entgegenhaltungen:
**FR - A - 2 183 826**

(73) Patentinhaber: **Degussa Aktiengesellschaft,
Weissfrauenstrasse 9, D-6000 Frankfurt am Main 1 (DE)**

(72) Erfinder: **Fischer, Robert, Dr. Dipl.-Chem.,
Haydnstrasse 8, D-6053 Obertshausen (DE)**
Erfinder: **Kleinschmit, Peter, Dr. Dipl.-Chem.,
Wildaustrasse 19, D-6450 Hanau 9 (DE)**
Erfinder: **Müller, Hartmut, Dr. Dipl.-Chem.,
Barbarossastrasse 38, D-6000 Frankfurt 60 (DE)**
Erfinder: **Hinrichs, Wolfgang, Emmastrasse 7,
D-6050 Offenbach (DE)**

## Beschreibung

Die Erfindung betrifft ein Verfahren zur Herstellung von Zirkonsilikat-Farbkörpern, in die diskrete anorganische Buntpigmentteilchen eingebaut werden, durch Umsetzung von Zirkonoxid mit Kieselsäure und Buntpigmenten bzw. Buntpigmente bildenden Substanzen in Gegenwart von Mineralisatoren bei Temperaturen oberhalb 600 °C.

In der DE-PS 23 12 535 werden sogenannte Einschlußpigmente beschrieben, bei denen Buntpigmente als diskrete Phase in glasurstabilen durchsichtigen Kristallen von beispielsweise Zirkonsilikat eingeschlossen sind. Als Buntpigmente werden hierbei vorzugsweise Sulfide und Selenide von Kadmium, Zink und Quecksilber bzw. deren Mischkristalle verwendet.

Diese Farbkörper werden hergestellt durch Umsetzung von Zirkonoxid mit Kieselsäure und Buntpigmenten bzw. Buntpigmente bildenden Substanzen in Anwesenheit von Mineralisatoren bei Temperaturen oberhalb 600 °C, vorzugsweise bei 800 bis 1200 °C. Dabei werden die Buntpigmente als diskrete Phase von dem sich bildenden Zirkonsilikat umschlossen und sind so glasurstabil und säureunlöslich. Allerdings wird bei diesem Herstellungsverfahren ein großer Teil des Buntpigments nicht eingeschlossen und muß mit einer Säure aus dem Glühprodukt entfernt werden.

Es war daher Aufgabe der vorliegenden Erfindung, ein Verfahren zur Herstellung von Zirkonsilikat-Farbkörpern zu finden, in die diskrete anorganische Buntpigmentteilchen eingebaut werden, durch Umsetzung von Zirkonoxid mit Kieselsäure und Buntpigmenten bzw. Buntpigmente bildenden Substanzen in Gegenwart von Mineralisatoren bei Temperaturen oberhalb 600 C, bei dem die Ausbeute an Farbkörpern erhöht wird bzw. die Menge der nichteingebauten Buntpigmente wesentlich verringert werden kann.

Diese Aufgabe wurde erfindungsgemäß dadurch gelöst, daß ein Zirkonoxid mit spezifischen Oberflächen von 12 bis 200 $m^2/g$ eingesetzt wird, wobei die Oberfläche nach BET durch Stickstoffadsorption bestimmt wird.

Besonders bewährt haben sich Zirkonoxide mit spezifischen Oberflächen von 12 bis 20 $m^2/g$. Die Buntpigmente bestehen vorzugsweise aus Sulfiden, Seleniden oder Sulfoseleniden von Kadmium, Zink und/oder Quecksilber. Auch Telluride können eingesetzt werden. Dabei werden vorteilhafterweise die Sauerstoffverbindungen der Metalle und Schwefel in Form von Thiosulfat oder Sulfat als Ausgangssubstanzen verwendet.

Besonders gute Ausbeuten erhält man, wenn die Buntpigmente und die Kieselsäure in Form von mit einer Kieselsäurehülle versehenen Buntpigmenten eingesetzt werden, wie sie beispielsweise in der DE-PS 23 23 481 beschrieben sind. Wenn man ein solches Kieselsäureeinschlußpigment mit Zirkonoxid einer spezifischen Oberfläche von 12 - 200 $m^2/g$ und einer Alkaliverbindung, wie Lithiumfluorid, als Mineralisator auf 800 bis 1200 °C erhitzt, bildet sich aus der Silikathülle und dem Zirkonoxid in guter Ausbeute eine Zirkonsilikathülle, die resistent gegen Glasflüsse und gegen Säure ist.

Vorteilhafterweise werden die Ausgangssubstanzen in einem Mischaggregat mit hohem Energieeintrag, wie beispielsweise einer Kugelmühle, unter Verdichtung homogen vermischt. Die Glühbehandlung erfolgt vorzugsweise kontinuierlich, wie z. B. in einer Glühschnecke oder einem Drehrohrofen.

Folgende Beispiele sollen das erfindungsgemäße Verfahren näher erläutern:

## Beispiel 1

20 g Kadmiumsulfid werden mit 100 g Kieselsol (entspricht 40 g $SiO_2$) und 60 g Zirkonoxid (spez. Oberfläche 120 $m^2/g$ und 2 g Lithiumfluorid in einer Kugelmühle zwei Stunden homogen gemischt. Das Mischgut wird dabei stark verdichtet (auf 10 % des Ausgangsvolumens). Nach der Glühung in einem Elektroofen bei 1000°C wird das erhaltene Produkt aufgemahlen und mit konz. $HNO_3$, gekocht. Es wird ein rotes Einschlußpigment erhalten.

## Beispiel 2

20 g Kadmiumsulfoselenid werden mit 40 g Kieselsäure, 60 g Zirkonoxid (spez. Oberfläche 20 $m^2/g$) und 2 g Lithiumfluorid homogen gemischt und in einer Glühschnecke I Stunde bei 1000 °C geglüht. Das Glühprodukt wird nach dem Aufmahlen in konz. $HNO_3$ gekocht. Das resultierende rote Einschlußpigment eignet sich zur Einfärbung von Glasuren.

## Beispiel 3

100 g eines Kieselsäureeinschlußpigments aus Cd ($S_xSe_{1-x}$ hergestellt nach der DE-PS 23 23 481 mit einem $SiO_2$-Gehalt von 80 % werden mit 120 g $ZrO_2$ (spez. Oberfläche 12 $m^2/g$) und LiF als Mineralisator homogen gemischt und bei 1000 C geglüht. Das Glühgut wird aufgemahlen und in konz. $HNO^3$ gekocht. Nach Neutralisation und Trocknung kann das erhaltene rote Einschlußpigment zur Einfarbung von geeigneten Glasuren verwendet werden.

## Patentansprüche

1. Verfahren zur Herstellung von Zirkonsilikat-Farbkörpern, in die diskrete anorganische Buntpigmentteilchen eingeschlossen werden, durch Umsetzung von Zirkonoxid mit Kieselsäure und Buntpigmenten bzw. Buntpigmente bildenden Substanzen in Gegenwart von Mineralisatoren bei Temperaturen ob erhalb 600°C, *dadurch gekennzeichnet*, daß ein Zirkonoxid mit spezifischen Oberflächen von 12 bis 200m$_2$/g eingesetz wird

2. Verfahren zur Herstellung von Zirkonsilikat-Farbkörpern nach Anspruch 1, *dadurch gekennzeichnet*, daß Zirkonoxid mit einer spezifischen Oberfläche von 12 bis 20 m$_2$/g verwendet wird.

3. Verfahren zur Herstellung von Zirkonsilikat-Farbkörpern nach Anspruch 1 und 2, *dadurch gekennzeichnet*, daß die Buntpigmente aus Sulfiden, Seleniden, und/oder Telluriden des Kadmiums, Zinks und/oder Quecksilbers bestehen.

4. Verfahren zur Herstellung von Zirkonsilikat-Farbkörpern nach Anspruch 1 bis 3, *dadurch gekennzeichnet*, daß die Kieselsäure in Form einer die Buntpigmentteilchen umgebenden Kieselsäurehülle eingesetzt wird.

5. Verfahren zur Herstellung von Zirkonsilikat-Farbkörpern nach Anspruch 1 bis 4, *dadurch gekennzeichnet*, daß die Komponenten in einem Mischaggregat mit hohem Energieeintrag homogen vermischt und dabei verdichtet werden.

6. Verfahren zur Herstellung von Zirkonsilikat-Farbkörpern nach Anspruch 1 bis 5, *dadurch gekennzeichnet*, daß das Mischgut einer kontinuierlichen Glühbehandlung unterworfen wird.

## Revendications

1- Procédé pour la fabrication de corps colorés à base de silicate de zirconium dans lesquels sont incluses des particules de pigments colorés mineraux separées, par réaction d'oxyde de zirconium avec de l'acide silicique et des pigments colorés ou des substances formant des pigments colorés, en présence de minéralisateurs, à des températures supérieures à 600°C, procédé caractérisé en ce qu'on utilise un oxyde de zirconium dont la surface spécifique est de 12 à 200 m$^2$/g.

2- Procédé pour la fabrication de corps colorés à base de silicate de zirconium suivant la revendication 1, caractérisé en ce que l'oxyde de zirconium est utilisé avec une surface spécifique de 12 à 20 m$^2$/g.

3- Procédé pour la fabrication de corps colorés à base de silicate de zirconium suivant les revendications 1 et 2, caractérisé en ce que les pigments colorés sont constitués par des sulfures, séléniures et/ou tellurures de cadmium, de zinc et/ou de mercure.

4- Procédé pour la fabrication de corps colorés à base de silicate de zirconium suivant les revendications 1 à 3, caractérisé en ce que l'acide silicique est mis en oeuvre sous la forme d'une gaine d'acide silicique entourant les particules de pigments colorés.

5- Procédé pour la fabrication de corps colorés à base de silicate de zirconium suivant les revendications 1 à 4, caractérisé en ce que les composés sont mélangés d'une façon homogène dans un groupe broyeur fournissant une énergie importante et y sont compactés.

6- Procédé pour la fabrication de corps colorés à base de silicate de zirconium suivant les revendications 1 à 5, caractérisé en ce que la matière mélangée est soumise à un traitement de calcination continue.

## Claims

1. A process for the production of zirconium silicate colouring materials in which discrete inorganic coloured pigment particles are sealed, by reacting zirconium oxide with silica and coloured pigments or coloured pigment-forming substances in the presence of mineralisers at temperatures above 600°C characterised in that a zirconium oxide with specific surfaces of from 12 to 200 m$^2$/g is used.

2. A process for the production of zirconium silicate colouring materials according to claim 1 characterised in that zirconium oxide with a specific surface of from 12 to 20 m$^2$/g is used.

3. A process for the production of zirconium silicate colouring materials according to claim 1 and 2, characterised in that the coloured pigments consist of sulphides, selenides, and/or tellurides of cadmium, zinc and/or mercury.

4. A process for the production of zirconium silicate colouring materials according to claim 1 to 3 characterised in that the silica is used in the form of a silica shell surrounding the coloured pigment particles.

5. A process for the production of zirconium silicate colouring materials according to claim 1 to 4 characterised in that the components are homogenously mixed in a mixing assembly with high energy yield and are thereby compressed.

6. A process for the production of zirconium silicate colouring materials according to claim 1 to 5, characterised in that the material to be mixed is subjected to a continuous annealing treatment.